# EUROPEAN PATENT APPLICATION

(11) **EP 2 607 890 A1**
(43) Date of publication of application: **26.06.2013**
(21) Application number: 12196909.1
(22) Date of filing: 13.12.2012
(51) Int. Cl.: G01N 21/84

(54) **Method and apparatus for inspection of components**

(30) Priority: 22.12.2011 GB 201122082
(71) Applicant: Rolls-Royce plc, London SW1E 6AT (GB); Rolls-Royce Deutschland Ltd & Co KG, 15827 Blankenfelde-Mahlow (DE)
(72) Inventor: Mason, Andrew David Gordon, Derby, DE21 7TN (GB); Crabtree, James Stephen, Belper, Derbyshire DE56 1JJ (GB); Ulbricht, Iris, 15834 Rangsdorf (DE)
(74) Representative: Roberts, Nicholas John

(57) **Abstract**

The quality of a dry film lubricant coating or molybdenum based undercoat coating provided on the root of a gas turbine fan blade is determined by a method which includes providing an image of the coating taken under controlled conditions which include diffusing light through a translucent screen. The difference between an RGB value of a group of pixels from the image compared with a known RGB value is determined and used to calculate the quality of the coating.

## Description

### Technical Field of Invention

The present invention relates to methods and apparatus for inspecting components and particularly methods and apparatus for inspecting coatings on components and determining the wear of a coating.

### Background of Invention

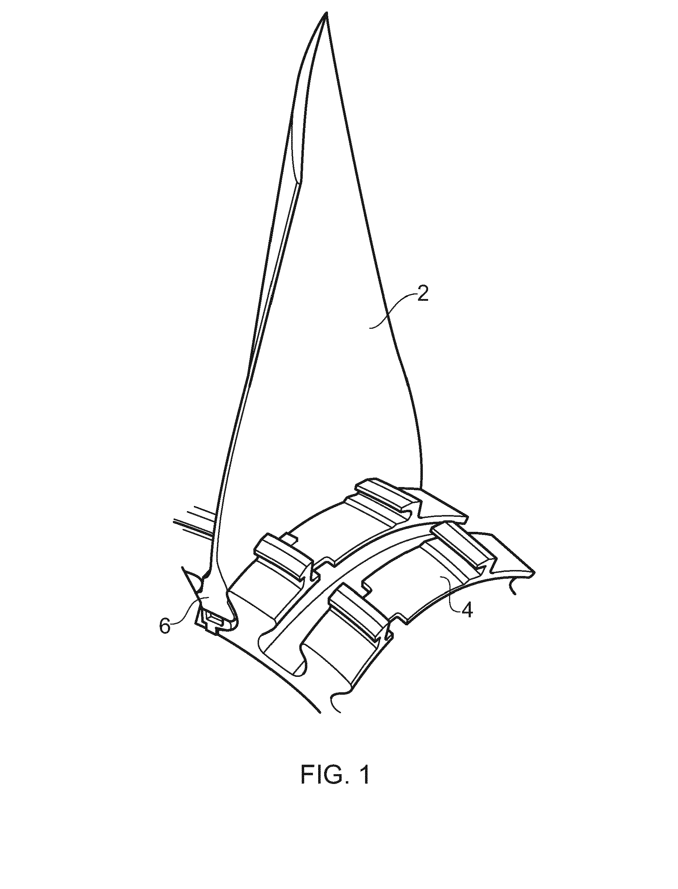

Figure 1 shows both a view of a typical wide chord fan blade 2 mounted within a fan disc 4. The fan root 6 is formed of titanium and provided first with a plasma sprayed layer of a hard molybdenum based coating such as one provided by Sulzer Metco and secondly with an over-layer of a dry film lubricant which provides a stable lubricative film between the root and the disc. The layers together protect the interface between the root and the disc to both prolong the working life of the components and the coatings also provide reduced chance of failure due to high cycle fatigue.

The coatings are regularly inspected to determine whether they are still of acceptable quality and / or coverage with a manual inspection due to the similarity in the colour of each coating to the other coating and to the base metal of the root. Manual inspection is time consuming and relies on the experience of the inspector for accurate results. Depending on the results of the inspection appropriate servicing decisions are made which can include removal and replacement of the lubricant and/or molybdenum layer or setting the interval for the next inspection.

It is an object of the present invention to seek to provide an improved method of inspection.

### Statements of Invention

According to a first aspect of the invention there is provided a method of determining the wear of a coating the method comprising the steps of: providing an image of the coating, determining the difference between an RGB value of a group of pixels comprising a plurality of pixels of the image with a known RGB value, and calculating the quality of the coating from the determined difference.

Preferably the known RGB value is the RGB value taken from a pristine layer of the same material as the coating.

The coating may be located on an undercoat. The known RGB value is the RGB value taken from a pristine layer of the undercoat.

Preferably the undercoat is a molybdenum based coating. The coating may be a dry film lubricant. The coating is preferably provided on the root of a blade for a gas turbine engine. Preferably the blade has been used within a turbine engine prior to determining the wear of the coating.

The method of calculating the quality may comprise the steps of determining whether the difference is within a predetermined range and applying a value to each group within the predetermined range.

The applied value may be the same for each group in the predetermined range. The applied value may be calculated as a percentage of the difference to the predetermined range.

Preferably the method further comprises the steps of locating the component within a volume having a translucent wall, wherein the volume is illuminated by a light source on the opposite side of the translucent wall to the component.

The light source may be an array of Light Emitting Diodes (LEDs).

The volume may have a rounded triangular cross-section with an aperture in the translucent wall at one of the apexes of the volume, the method providing the image from capture by a camera through the aperture.

According to a further aspect of the invention there is provided apparatus for determining the quality of a coating, the apparatus having a translucent wall bounding a volume for locating a coating on a surface, a light source on the opposite side of the translucent wall to the surface and a camera for capturing an image of the coating through an aperture in the translucent wall.

Preferably the volume has a rounded triangular cross-section and the aperture is provided at one of the apexes of the volume.

The light source may be provided on one of the sides of the triangle leading to the apex. Two light sources may be provided, one on each side of the triangle leading to the apex.

The present invention will now be described by way of example only and with reference to the accompanying drawings, in which:

### Description of Drawings

Fig. 1 depicts a fan blade mounted to a rotor hub

Fig. 2 depicts apparatus in accordance with the invention that is used to image a coating on a fan blade root;

Fig. 3 is a schematic of the apparatus of Figure 2;

Fig. 4 is an image of the blade root taken by the apparatus of Figures 2 and 3;

Fig. 5 is an image processed to indicate the condition of the coating

Fig. 6 is a processed image and a graph indicating the percentage value of the coating

### Detailed Description of Invention

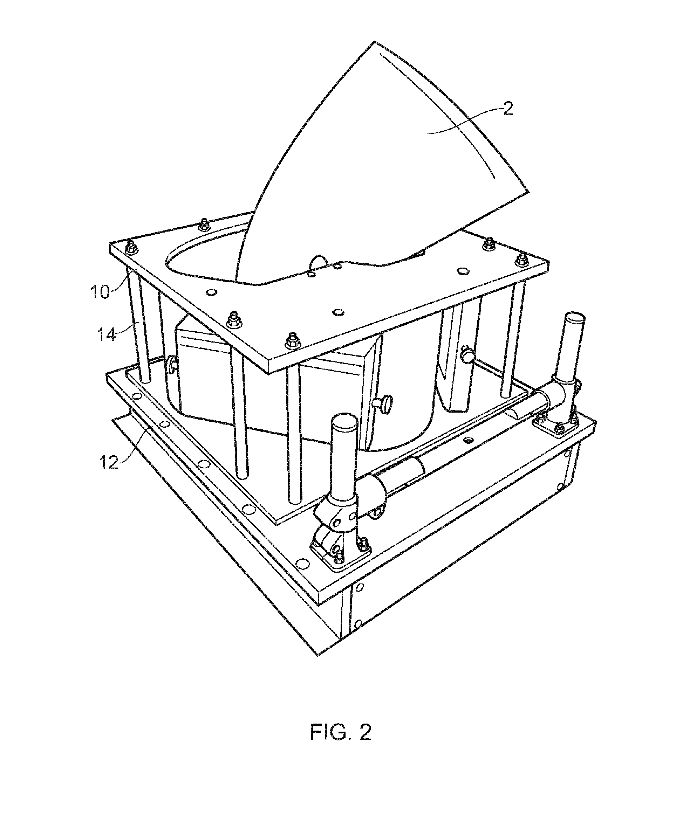

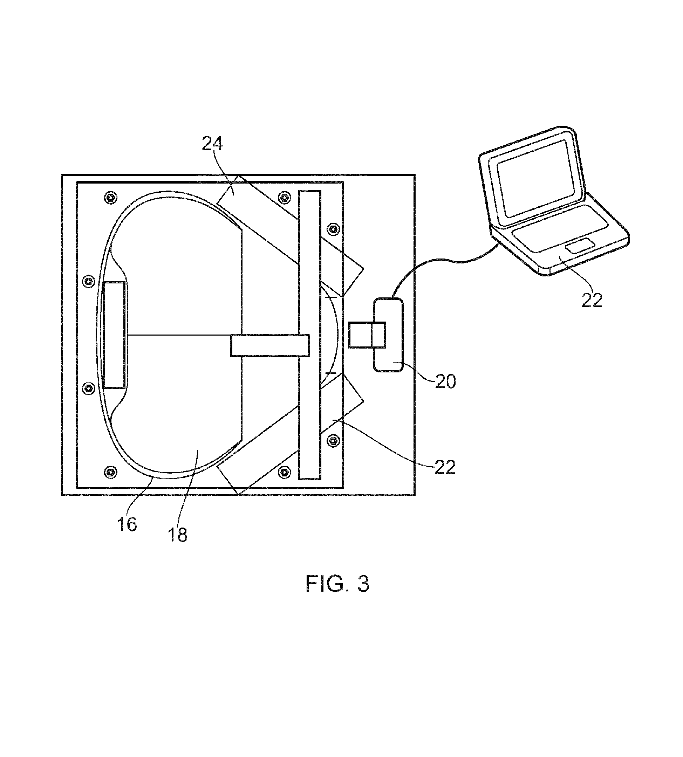

Figures 2 and 3 depict an exemplary apparatus which is used to inspect the coatings on the root region of a fan blade. Figure 2 is a perspective image of the apparatus whilst Figure 3 is a top view of the apparatus of Figure 2. The apparatus has an upper plate 10 and a lower plate 12 separated by spacers 14. A translucent wall 16 of perspex or other suitable material extends between the upper and lower plates around a volume 18 which holds the blade 2 to be inspected. The volume is shaped as a rounded triangle with an aperture at one apex of the triangle. A camera 20 is positioned to take an image of the blade within the volume through the aperture and the image is stored on a storage device, such as a laptop computer 22.

One or more arrays of independently controllable lights 22, 24, preferably LED, are located adjacent the sides of the translucent wall which extend from the aperture and illuminate the volume through the translucent wall. The translucent wall diffuses the light such that a controllable and uniform level illuminates the blade.

The blade is located in a fixture (not shown) within the volume so that its position is accurately defined. The fixture used may be different for each blade type and / or the region of the blade to be to be inspected. The focus and/or zoom of the camera is adjusted, where necessary, for the desired image to be taken and an image captured.

The image is compared with a calibration picture which may be for an equivalent blade of a known condition or of test samples of titanium, molybdenum, dry film lubricant, titanium coated with molybdenum or molybdenum coated with dry film lubricant. Each of the different materials give slightly different RGB responses which are hard to detect for the untrained eye.

The comparison uses image processing tools to compare the RGB values for each pixel or a group of pixels with the known values for the material type under inspection which has been determined under similar lighting conditions. The difference between the pixel value and the known value is recorded and stored in a thresholded image. Contrasting colours may be used to distinguish ranges of values which permit easy visual identification of the ranges by a skilled or unskilled operator.

Beneficially the ranges can be narrow so that there is clear demarcation within the threshold image. Typically the threshold image has two ranges but may have three or more as required. The first range typically contains the values displayed from a first material for example the dry film lubricant whilst the second range contains the values displayed by the molybdenum coating onto which the dry film lubricant is deposited. The third range may be encompass intermediate values between that of pristine dry film lubricant and pristine molybdenum or values determined from contaminants or materials other than the dry film lubricant or molybdenum.

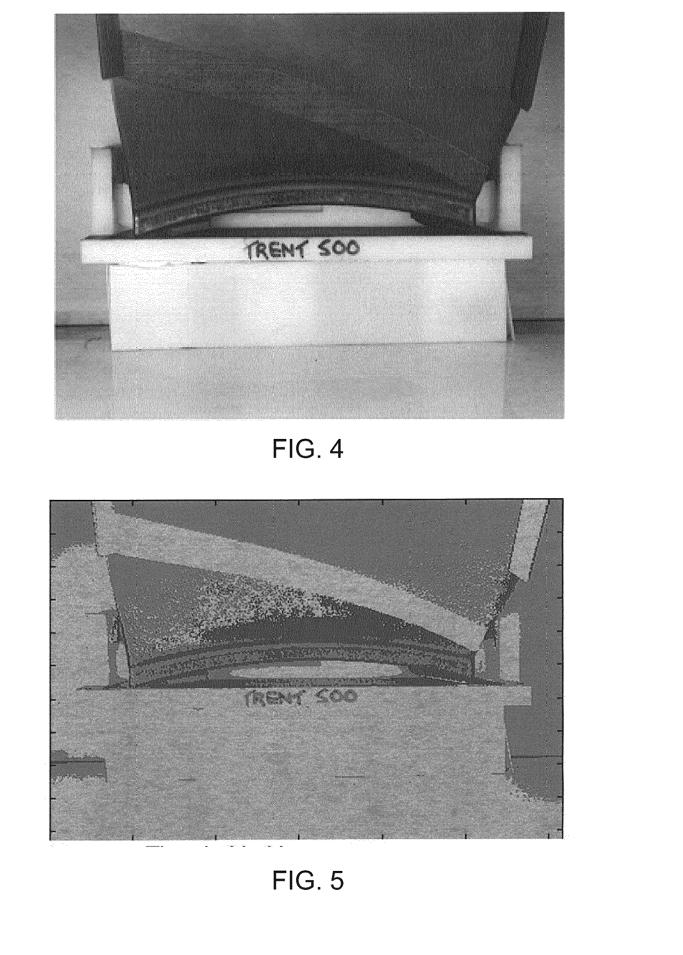

Figure 4 is a photographic image of a fan blade taken by camera 20 to which no image processing has been applied. The blade has a coating of dry film lubricant deposited on top of a layer of molybdenum which, due to the similarities in colour, are not clearly distinguishable to the naked eye. It is difficult to determine from the direct image, even when the lighting and camera settings are tightly controlled, where a uniform and complete coating of the dry film lubricant is held on the surface.

By applying a threshold to the difference between the RGB value for pristine dry film lubricant and each pixel, or group of pixels, of the image it is possible to generate the image depicted in Figure 5. The range is selected and the colouring applied such that the darker colour is where the dry film lubricant is not worn i.e. it is still present in an almost pristine condition on the blade root. The lighter colours are applied to those values which fall outside the range selected for the pristine dry film lubricant layer and are within the range that is expected between the difference of the RGB value for the dry film lubricant and the RGB value which is returned for the molybdenum layer or for a known "worn" dry film lubricant of a predetermined condition. Even to the untrained eye, when the meaning of the particular colour is explained, it is easy to identify regions where the dry film lubricant layer is pristine, where the layer is starting to wear and where the dry film lubricant layer is worn.

Beneficially, the image of Figure 4 may have different threshold criteria applied to subtract the RGB data from other datum values, such as those determined from pristine layers of molybdenum, titanium or known contaminants in the engine and which may affect performance of the component inspected. By selecting appropriate datum values and threshold ranges it is possible, from a single image, to inspect the blade for several conditions.

For some cases it may not be possible to inspect for all desired conditions from a single image because, for example, the light under which the image was taken was sub-optimal for the condition to be inspected. Beneficially, the apparatus and method described in this application may be further automated such that the light level, camera exposure, camera position or focus, or any other appropriate variable, may be varied automatically so that further images may be taken which are optimal for the desired condition to be inspected.

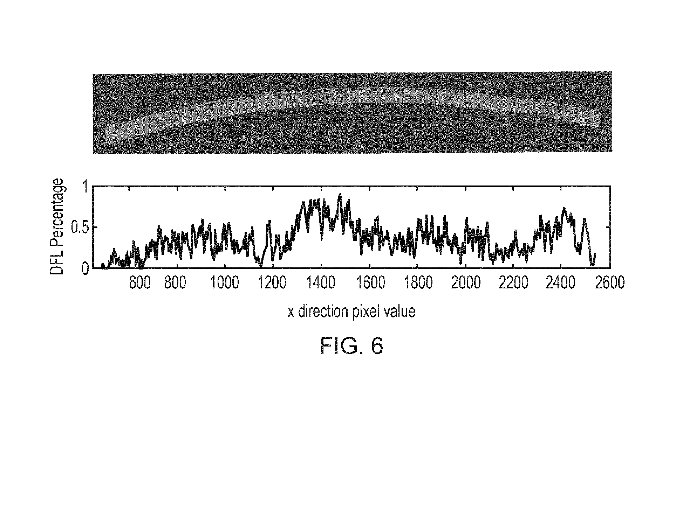

In a further improvement to the method the difference of the measured values to the datum values may be plotted as the inverse of a percentage value relative to the upper and lower boundaries of a range. For the embodiment described above a low difference between the datum taken from pristine dry film lubricant and the measured value from the image gives a value that is close to 100%. A difference that is close to or outside the boundaries of the range will give a value that is close to 0%. The values may be plotted on a pixel by pixel basis to provide a three dimensional image map of the component or, as shown in the plot of figure 6, the values may be summed across a group of pixels and displayed as a two-dimensional plot. In the plot of Figure 6 the average of the pixels of a group at a chordal location on the blade is plotted.

Rules may be applied to this image such that components which return values within a predetermined tolerance band undergo a first action but those which return values outside one or more predetermined tolerance band undergo a second action.

In this embodiment the first action may be to return the blade to service under a normal service interval; the second action may be to return to service under a shortened service interval, re-coat or scrap the blade, or other action as appropriate.

## Claims

1. A method of determining the wear of a coating the method comprising the steps of:
providing an image of the coating,
determining the difference between an RGB value of a group of pixels comprising a plurality of pixels of the image with a known RGB value, and
calculating the quality of the coating from the determined difference.

2. A method according to claim 1, wherein the known RGB value is the RGB value taken from a pristine layer of the same material as the coating.

3. A method according to claim 1 or claim 2, wherein the coating is located on an undercoat.

4. A method according to claim 3, wherein the known RGB value is the RGB value taken from a pristine layer of the undercoat.

5. A method according to any of claims 3 to claim 4, wherein the undercoat is a molybdenum based coating.

6. A method according to any preceding claim, wherein the coating is a dry film lubricant.

7. A method according to any preceding claim, wherein the coating is provided on the root of a blade for a gas turbine engine.

8. A method according to claim 7, wherein the blade is removed from the gas turbine engine prior to determining the wear of the coating.

9. A method according to any preceding claim, the method of calculating the quality comprising the steps of determining whether the difference is within a predetermined range and applying a numerical value to each group within the predetermined range.

10. A method according to claim 8, wherein the applied numerical value is the same for each group in the predetermined range.

11. A method according to claim 8, wherein the applied value is calculated as a percentage of the difference to the predetermined range.

12. A method according to any preceding claim, further comprising the steps of locating the component within a volume having a translucent wall, wherein the volume is illuminated by a light source on the opposite side of the translucent wall to the component.

13. A method according to claim 12, wherein the light source is an array of Light Emitting Diodes (LEDs)

14. A method according to claim 12 or claim 13, wherein the volume has a rounded triangular cross-section with an aperture in the translucent wall at one of the apexes of the volume, the method providing the image from capture by a camera through the aperture.

15. A method according to any preceding claim further comprising the step of removing the coating if the quality is calculated to be below a minimum threshold.
